# EUROPEAN PATENT APPLICATION

(11) **EP 2 026 501 A2**
(43) Date of publication of application: **18.02.2009**
(21) Application number: 08006299.5
(22) Date of filing: 31.03.2008
(51) Int. Cl.: H04L 12/24, H04L 12/56, H04L 12/28

(54) **Method for a heterogeneous wireless ad hoc mobile service provider**

(30) Priority: 17.08.2007 US 840905
(71) Applicant: Qualcomm Incorporated, San Diego, CA 92121-1714 (US)
(72) Inventor: Krishnaswamy, Dilip, c/o Qualcomm Incorporated, San Diego, CA 92121-1714 (US); Atul, Suri, Qualcomm Incorporated, San Diego, CA 92121-1714 (US)
(74) Representative: Heselberger, Johannes

(57) **Abstract**

An adhoc service provider includes a user interface. The adhoc service provider is configured to enable a user to wirelessly access a network through the user interface, and provide a wireless access point to the network for a mobile client authenticated by a server.

## Description

### BACKGROUND

### Field

The present disclosure relates generally to telecommunications, and more specifically to a method for a heterogeneous wireless ad-hoc mobile internet access service.

### Background

Wireless telecommunication systems are widely deployed to provide various services to consumers, such as telephony, data, video, audio, messaging, broadcasts, etc. These systems continue to evolve as market forces drive wireless telecommunications to new heights. Today, wireless networks are providing broadband Internet access to mobile subscribers over a regional, a nationwide, or even a global region. Such networks are sometimes referred as Wireless Wide Area Networks (WWANs). WWAN operators generally offer wireless access plans to their subscribers such as subscription plans at a monthly fixed rate.

Accessing WWANs from all mobile devices may not be possible. Some mobile devices may not have a WWAN radio. Other mobile devices with a WWAN radio may not have a subscription plan enabled. Adhoc networking allows mobile devices to dynamically connect over wireless interfaces using protocols such as WLAN, Bluetooth, UWB or other protocols. There is a need in the art for a methodology to allow a user of a mobile device without WWAN access to dynamically subscribe to wireless access service provided by a user with a WWAN-capable mobile device using wireless adhoc networking between the mobile devices belong to the two users.

### SUMMARY

In one aspect of the disclosure, an adhoc service provider includes a user interface, and a processing system configured to enable a user to wirelessly access a network through the user interface, the processing system being further configured to provide a wireless access point to the network for a mobile client authenticated by a server.

In another aspect of the disclosure, an adhoc service provider includes a user interface, means for enabling a user to wirelessly access a network through the user interface, and means for providing a wireless access point to the network for a mobile client authenticated by a server.

In yet another aspect of the disclosure, a method of providing service from an adhoc service provider having a user interface includes enabling a user to wirelessly access a network through the user interface, and providing a wireless access point to the network for a mobile client authenticated by a server.

In a further aspect of the disclosure, a machine-readable medium includes instructions executable by a processing system in an adhoc service provider having a user interface, the instructions include code for enabling a user to wirelessly access a network through the user interface, and code for providing a wireless access point to the network for a mobile client authenticated by a server.

It is understood that other embodiments of the present invention will become readily apparent to those skilled in the art from the following detailed description, wherein various embodiments of the invention are shown and described by way of illustration. As will be realized, the invention is capable of other and different embodiments and its several details are capable of modification in various other respects, all without departing from the spirit and scope of the present invention. Accordingly, the drawings and detailed description are to be regarded as illustrative in nature and not as restrictive.

### BRIEF DESCRIPTION OF THE DRAWING

FIG. 1 is a conceptual block diagram illustrating an example of a telecommunications system.

FIG. 2 is a conceptual block diagram illustrating an example of the functionality of an adhoc service provider.

FIG. 3 is a conceptual block diagram illustrating an example of a hardware configuration for an adhoc service provider.

FIG. 4 is a conceptual block diagram illustrating an example of the functionality of a processing system in an adhoc service provider.

### DETAILED DESCRIPTION

The detailed description set forth below in connection with the appended drawings is intended as a description of various configurations of the present invention and is not intended to represent the only configurations in which the present invention may be practiced. The detailed description includes specific details for the purpose of providing a thorough understanding of the present invention. However, it will be apparent to those skilled in the art that the present invention may be practiced without these specific details. In some instances, well-known structures and components are shown in block diagram form in order to avoid obscuring the concepts of the present invention.

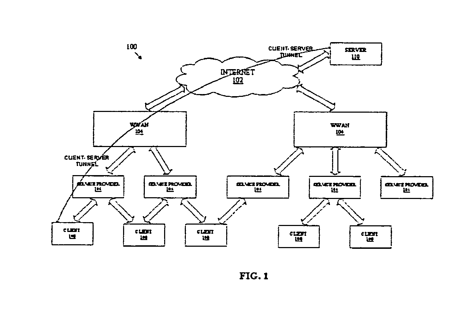

FIG. 1 is a conceptual block diagram illustrating an example of a telecommunications system. The telecommunications system 100 is shown with multiple WWANs that provide broadband access to a network 102 for mobile subscribers. The network 102 may be a packet-based network such as the Internet or some other suitable network. For clarity of presentation, two WWANs 104 are shown with a backhaul connection to the Internet 102. Each WWAN 104 may be implemented with multiple fixed-site base stations (not shown) dispersed throughout a geographic region. The geographic region may be generally subdivided into smaller regions known as cells. Each base station may be configured to serve all mobile subscribers within its respective cell. A base station controller (not shown) may be used to manage and coordinate the base stations in the WWAN 104 and support the backhaul connection to the Internet 102.

Each WWAN 104 may use one of many different wireless access protocols to support radio communications with mobile subscribers. By way of example, one WWAN 104 may support Evolution-Data Optimized (EV-DO), while the other WWAN 104 may support Ultra Mobile Broadband (UMB). EV-DO and UMB are air interface standards promulgated by the 3rd Generation Partnership Project 2 (3GPP2) as part of the CDMA2000 family of standards and employs multiple access techniques such as Code Division Multiple Access (CDMA) to provide broadband Internet access to mobile subscribers. Alternatively, one of WWAN 104 may support Long Term Evolution (LTE), which is a project within the 3GPP2 to improve the Universal Mobile Telecommunications System (UMTS) mobile phone standard based primarily on a Wideband CDMA (W-CDMA) air interface.. One of WWAN 104 may also support the WiMAX standard being developed by the WiMAX forum. The actual wireless access protocol employed by a WWAN for any particular telecommunications system will depend on the specific application and the overall design constraints imposed on the system. The various techniques presented throughout this disclosure are equally applicable to any combination of heterogeneous or homogeneous WWANs regardless of the wireless access protocols utilized.

Each WWAN 104 has a number of mobile subscribers. Each subscriber may have a mobile node 106 capable of accessing the Internet 102 directly through the WWAN 104. In the telecommunications system shown in FIG. 1, these mobile nodes 106 access the WWAN 104 using a EV-DO, UMB or LTE wireless access protocol; however, in actual implementations, these mobile nodes 106 may be configured to support any wireless access protocol.

One or more of these mobile nodes 106 may be configured to create in its vicinity an ad-hoc network based on the same or different wireless access protocol used to access the WWAN 104. By way of example, a mobile node 106 may support a UMB wireless access protocol with a WWAN, while providing an IEEE 802.11 access point for mobile nodes 108 that cannot directly access a WWAN. IEEE 802.11 denotes a set of Wireless Local Access Network (WLAN) standards developed by the IEEE 802.11 committee for short-range communications (e.g., tens of meters to a few hundred meters). Although IEEE 802.11 is a common WLAN wireless access protocol, other suitable protocols may be used.

A mobile node 106 that may be used to provide an access point for another mobile node 108 will be referred to herein as an "adhoc service provider." A mobile node 108 that may use an access point of an adhoc service provider 106 will be referred to herein as a "mobile client." A mobile node, whether an adhoc service provider 106 or a mobile client 108, may be a laptop computer, a mobile telephone, a personal digital assistant (PDA), a mobile digital audio player, a mobile game console, a digital camera, a digital camcorder, a mobile audio device, a mobile video device, a mobile multimedia device, or any other device capable of supporting at least one wireless access protocol.

The adhoc service provider 106 may extend its wireless broadband Internet access service to mobile clients 108 that would otherwise not have Internet access. A server 110 may be used as an "exchange" to enable mobile clients 108 to purchase unused bandwidth from adhoc service providers 106 to access, for example, the Internet 102 across WWANs 104.

An adhoc service provider 106, a server 110, and one or more mobile clients 108 may establish a network that is an ad-hoc heterogeneous wireless network. By way of example, a heterogeneous wireless network may include at least two types of wireless networks (e.g., a WWAN and a WLAN). By way of example, an ad-hoc network may be a network whose specific configuration may change from time to time or from the formation of one network to the next. The network configuration is not pre-planned prior to establishing the network. Examples of configurations for an ad-hoc network may include a configuration as to which members are to be in the network (e.g., which adhoc service provider, which server, and/or which mobile client(s) are to be included in a network), a configuration as to the geographic locations of an adhoc service provider and mobile client(s), and a configuration as to when and how long a network is to be established.

For illustrative purposes only, exemplary scenarios of ad-hoc networks are described below. Scenario 1: While a mobile subscriber is at an airport on Tuesday 8 am, he may turn on his mobile node (e.g., a laptop computer or a mobile telephone), use it as an adhoc service provider while he is waiting for his flight, and establish an ad-hoc network for 30 minutes. The ad-hoc network may include one or more mobile clients (e.g., other laptop computers or mobile telephones) in vicinity. Scenario 2: On Wednesday 5 pm, while the mobile subscriber is at a hotel, he may use the same mobile node to form another ad-hoc network for four hours, providing its service to the same mobile clients, different mobile clients, or a combination of both. Scenario 3: On Wednesday 5 pm, a different adhoc service provider may form an ad-hoc network at the airport where the first adhoc service provider was the day before. Because the service providers and clients are mobile, an ad-hoc network can be a "mobile" network.

The server 110 may be a centralized server or a distributed server. The centralized server may be a dedicated server or integrated into another entity such as a desktop or laptop computer, or a mainframe. The distributed server may be distributed across multiple servers and/or one or more other entities such as a laptop or desktop computer, or a mainframes. In at least one configuration, the server 110 may be integrated, either in whole or part, into one or more adhoc service providers.

In one configuration of a telecommunications system 100, the server 110 charges the mobile clients 108 based on usage. For the occasional user of mobile Internet services, this may be an attractive alternative to the monthly fixed rate wireless access plans. The revenue generated from the usage charges may be allocated to the various entities in the telecommunications system 100 in a way that tends to perpetuate the vitality of the exchange. By way of example, a portion of the revenue may be distributed to the adhoc service providers, thus providing a financial incentive for mobile subscribers to become adhoc service providers. Another portion of the revenue may be distributed to the WWAN operators to compensate them for the bandwidth that would otherwise go unutilized. Another portion of the revenue may be distributed to the manufacturers of the mobile nodes. The remainder of the revenue could be kept by the server operator that provides the exchange. The server 110, which may be a centralized server as shown or a distributed server including multiple servers, may be used to determine how to allocate revenue generated from the mobile clients 108 to the various entities in the telecommunications system 100.

The server 110 may be implemented as a trusted server. It can therefore be authenticated, for example, using a Public Key Infrastructure (PKI) certificate in a Transport Layer Security (TLS) session between the server 110 and an adhoc service provider 106, or between the server 110 and a mobile client 108. Alternatively, the server 110 may be authenticated using self-signed certificates or by some other suitable means.

Regardless of the manner in which the server 110 is authenticated, a secure session channel may be established between the server 110 and an adhoc service provider 106, or between the server 110 and a mobile client 108, during registration. In one configuration of a telecommunications system 100, a mobile client 108 may register with the server 110 to set up a user name and password with payment information. An adhoc service provider 106 may register with the server 110 to notify its desire to provide a wireless access point (e.g., an Internet access point) to mobile clients 108.

The server 110 may also be used to provide admission control. Admission control is the process whereby the server 110 determines whether to allow an adhoc service provider 106 to provide service within a geographic location. The server 110 may limit the number of adhoc service providers 106 at a given location if it determines that additional adhoc service providers 106 will adversely affect performance in the WWAN. Additional constraints may be imposed by the WWAN operators that may not want its mobile subscribers to provide service in a given geographic location depending on various network constraints.

The server 110 may also be used to manage dynamic sessions that are established between the adhoc service providers 106 and the mobile clients 108. In one configuration of the telecommunications system 100, Extensible Authentication Protocol-Tunneled Transport Layer Security (EAP-TTLS) may be used for Authentication, Authorization and Accounting (AAA) and secure session establishment for a connection initiated by an adhoc service provider 106 with the server 110 when the adhoc service provider 106 is mobile and desires to provide service. EAP-TTLS may also be used for a session initiation request by a mobile client 108. In the latter case, the mobile client is the supplicant, the adhoc service provider 106 is the authenticator, and the server 110 is the authentication server. The adhoc service provider 106 sends the mobile client's credentials to the server 110 for EAP-AAA authentication. The EAP-TTLS authentication response from the server 110 is then used to generate a Master shared key. Subsequently, a link encryption key may be established between the adhoc service provider 106 and the mobile client 108.

Additional security may be achieved with a Secure Sockets Layer Virtual Private Network (SSL VPN) tunnel between a mobile client 108 and the server 110. The SSL VPN tunnel is used to encrypt traffic routed through an adhoc service provider 106 to provide increased privacy for a mobile client 108. Alternatively, the tunnel may be an IPsec tunnel or may be implemented using some other suitable tunneling protocol.

Once the tunnel is established between the server 110 and the mobile client 108, various services may be provided. By way example, the server 110 may support audio or video services to the mobile client 108. The server 110 may also support advertising services to the mobile client 108. Other functions of the server 110 include providing routing to and from the network for mobile client 108 content as well as providing network address translation to and from the network for the mobile client 108.

The server 110 may also provide support for a handoff of a mobile client 108 from one adhoc service provider 106 to another based on any number of factors. These factors may include, by way of example, the quality of service (QoS) required by each mobile client 108, the duration of the session required by each mobile client 108, and the loading, link conditions, and energy level (e.g., battery life) at the adhoc service provider 106.

The server 110 may also be used to store a quality metric for each adhoc service provider 106. This quality metric may be provided to the mobile clients 108 who may want to choose from available adhoc service providers 106. This metric may be continuously updated as more information becomes available about a specific adhoc service provider 106. The quality metric associated with each adhoc service provider 106 may be decreased or increased based on the QoS provided.

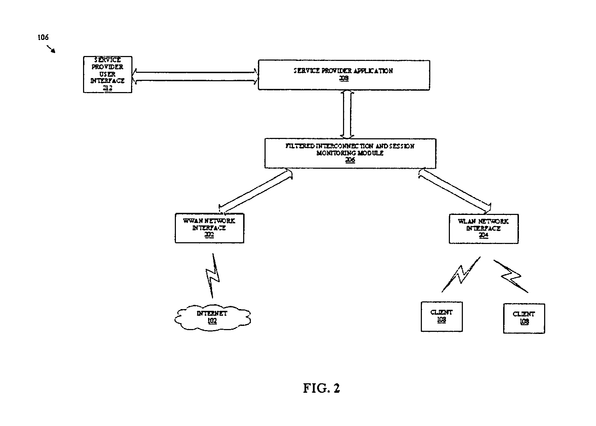

FIG. 2 is a conceptual block diagram illustrating an example of the functionality of an adhoc service provider. The adhoc service provider 106 has the ability to bridge wireless links over homogeneous or heterogeneous wireless access protocols. This may be achieved with a WWAN network adapter 202 that supports a wireless access protocol for a WWAN to the Internet 102, and a WLAN network adapter 204 that provides a wireless access point for mobile clients 108. By way of example, the WWAN network adapter 202 may include a transceiver function that supports EV-DO for Internet access through a WWAN, and the WLAN network adapter 204 may include a transceiver function that provides an 802.11 access point for mobile clients 108. Each network adapter 202, 204 may be configured to implement the physical layer by demodulating wireless signals and performing other radio frequency (RF) front end processing. Each network adapter 202, 204 may also be configured to implement the data link layer by managing the transfer of data across the physical layer.

The adhoc service provider 106 is shown with a filtered interconnection and session monitoring module 206. The module 206 provides filtered processing of content from mobile clients 108 so that the interconnection between the adhoc wireless links to the WWAN network interface 202 is provided only to mobile clients 108 authenticated by the server. The module 206 is also responsible for monitoring the sessions between the server and the authenticated mobile clients 108.

The adhoc service provider 106 is shown with a filtered interconnection and session monitoring module 306. The module 306 provides filtered processing of content from mobile clients 108 so that the interconnection between the adhoc wireless links to the WWAN network interface 302 is provided only to mobile clients 108 authenticated and permitted by the server to use the WWAN network. The module 306 also maintains tunneled connectivity between the server and the authenticated mobile clients 108.

The adhoc service provider 106 also includes a service provider application 308 that (1) enables the module 306 to provide adhoc services to mobile clients 108, and (2) supports WWAN or Internet access to a mobile subscriber or user of the adhoc service provider 106. The latter function is supported by a user interface 310 that communicates with the WWAN network adapter 302 through the module 306 under control of the service provider application 308. The user interface 312 may include a keypad, display, speaker, microphone, joystick, and/or any other combination user interface devices that enable a mobile subscriber or user to access the WWAN 104 or the Internet 102 (see FIG. 1)..

As discussed above, the service provider application 308 also enables the module 306 to provide adhoc services to mobile clients 108. The service provider application 308 maintains a session with the server 110 to exchange custom messages with the server. In addition, the service provider application 308 also maintains a separate session with each mobile client 108 for exchanging custom messages between the service provider application 308 and the mobile client 108. The service provider application 308 provides information on authenticated and permitted clients to the filtered interconnection and session monitoring module 306. The filtered interconnection and session monitoring module 308 allows content flow for only authenticated and permitted mobile clients 108. The filtered interconnection and session monitoring module 306 also optionally monitors information regarding content flow related to mobile clients 108 such as the amount of content outbound from the mobile clients and inbound to the mobile clients, and regarding WWAN and WLAN network resource utilization and available bandwidths on the wireless channels. The filtered interconnection and session monitoring module 306 can additionally and optionally provide such information to the service provider application 308. The service provider application 308 can optionally act on such information and take appropriate actions such as determining whether to continue maintaining connectivity with the mobile clients 108 and with the server, or whether to continue to provide service. It should be noted that the functions described in modules 306 and 308 can be implemented in any given platform in one or multiple sets of modules that coordinate to provide such functionality at the adhoc service provider 106.

When the adhoc service provider 106 decides to provide these services, the service provider application 208 sends a request to the server 110 for approval. The service provider application 208 requests authentication by the server 110 and approval from the server 110 to provide service to one or more mobile clients 108. The server 110 may authenticate the adhoc service provider 106 and then determine whether it will grant the adhoc service provider's request. As discussed earlier, the request may be denied if the number of adhoc service providers in the same geographic location is too great or if the WWAN operator has imposed certain constraints on the adhoc service provider 106.

Once the adhoc service provider 106 is authenticated, the service provider application 208 may advertise service information, such as an ad-hoc WLAN Service Set Identifier (SSID), the cost of service, the duration of service, the availability of the adhoc service provider, and a quality metric for the adhoc service provider. The service provider application 208 may also prompt changes to the advertised service information as conditions change. Interested mobile clients 108 may associate with the SSID to access the adhoc service provider 106. The service provider application 208 may then route authentication messages between the mobile clients 108 with the server 110 and configure the filtered interconnection and session monitoring module 206 to connect the mobile clients 108 to the server once authenticated. During the authentication of a mobile client 108, the service provider application 208 106 may use an unsecured wireless link.

The service provider application 208 106 may optionally choose to move a mobile client 108 to a new SSID with a secure link once the mobile client 108 is authenticated. In such situations, the service provider application 208 106 may distribute the time it spends in each SSID depending on the load that it has to support for existing sessions with mobile clients 108.

The service provider application 208 may also be able to determine whether it can support a mobile client 108 before allowing the mobile client 108 to access a network. Resource intelligence may be used to estimate the drain on the battery power, the QoS requirements, bandwidth requirements, latency requirements, processing requirements, required network access time, and/or other processing resources that would may be required by accepting a mobile client 108 may assist in determining whether the service provider application 208 should consider supporting a new mobile client 108 or accepting a handoff of that mobile client 108 from another adhoc service provider 106.

The service provider application 208 may admit mobile clients 108 and provide them with a certain QoS guarantee, such as an expected average bandwidth during a session. Average throughputs provided to each mobile client 108 over a time window may be monitored. The service provider application 208 106 may monitor the throughputs for all flows going through it to ensure that resource utilization by the mobile clients 108 is below a certain threshold, and that it is meeting the QoS requirement that it has agreed to provide to the mobile clients 108 during the establishment of the session.

The service provider application 208 may also provide a certain level of security to the wireless access point by routing content through the filtered interconnection and session monitoring module 206 without being able to decipher the content. Similarly, the service provider application 208 106 may be configured to ensure content routed between the user interface 210 and the WWAN 104 via the module 206 cannot be deciphered by mobile clients 108. The service provider application 208 may use any suitable encryption technology to implement this functionality.

The service provider application 208 106 may also maintain a time period for a mobile client 108 to access a network. The time period may be agreed upon between the service provider application 208 and the mobile client 108 during the initiation of the session. If the service provider application 208 determines that it is unable to provide the mobile client 108 with access to the network for the agreed upon time period, then it may notify both the server and the mobile client 108 regarding its unavailability. This may occur due to energy constraints (e.g., a low battery), or other unforeseen events. The server may then consider a handoff of the mobile client to another adhoc service provider, if there is such an adhoc service provider in the vicinity of the mobile client 108. The service provider application 208 106 may support the handoff of the mobile client 108.

The service provider application 208 may also dedicate processing resources to maintain a wireless link or limited session with mobile clients 108 served by other adhoc service providers. These mobile clients 108 may be pre-authenticated by routing authentication messages to and from the server. This may facilitate the handoff of mobile clients 108 to the adhoc service provider 106.

The service provider application 208 may manage the mobile client 108 generally, and the session specifically, through the user interface 210. Alternatively, the service provider application 208 may support a seamless operation mode with processing resources being dedicated to servicing mobile clients 108. In this way, the mobile client 108 is managed in a way that is transparent to the mobile subscriber. The seamless operation mode may be desired where the mobile subscriber does not want to be managing mobile clients 108, but would like to continue generating revenue by sharing bandwidth with mobile clients 108.

Although not shown, the adhoc service provider 106 may also include a server application. The server application may be used to enable the adhoc service provider 106 to function as a server to authenticate mobile clients 108.

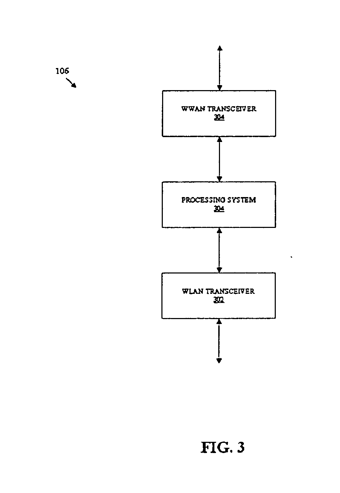

FIG. 3 is a conceptual block diagram illustrating an example of a hardware configuration for an adhoc service provider. The adhoc service provider 106 is shown with a WLAN transceiver 302, a WWAN transceiver 304, and a processing system 306. By way of example, the WLAN transceiver 302 may be used to implement the analog portion of the physical layer for the WLAN network adapter 202 (see FIG. 2), and the WWAN transceiver 304 may be used to implement the analog portion of the physical layer for the WWAN network adapter 204 (see FIG. 2).

The processing system 306 may be used to implement the digital processing portion of the physical layer, as well as the link layer, for both the WLAN and WWAN network adapters 202 and 204 (see FIG. 2). The processing system 306 may also be used to implement the filtered interconnection and session monitoring module 206 and the service provider application 208 (see FIG. 2).

The processing system 306 may be implemented using software, hardware, or a combination of both. By way of example, the processing system 306 may be implemented with one or more processors. A processor may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable entity that can perform calculations or other manipulations of information. The processing system 306 may also include one or more machine-readable media for storing software. Software shall be construed broadly to mean instructions, data, or any combination thereof, whether referred to as software, firmware, middleware, microcode, hardware description language, or otherwise. Instructions may include code (e.g., in source code format, binary code format, executable code format, or any other suitable format of code).

Machine-readable media may include storage integrated into a processor, such as might be the case with an ASIC. Machine-readable media may also include storage external to a processor, such as a Random Access Memory (RAM), a flash memory, a Read Only Memory (ROM), a Programmable Read-Only Memory (PROM), an Erasable PROM (EPROM), registers, a hard disk, a removable disk, a CD-ROM, a DVD, or any other suitable storage device. In addition, machine-readable media may include a transmission line or a carrier wave that encodes a data signal. Those skilled in the art will recognize how best to implement the described functionality for the processing system 306.

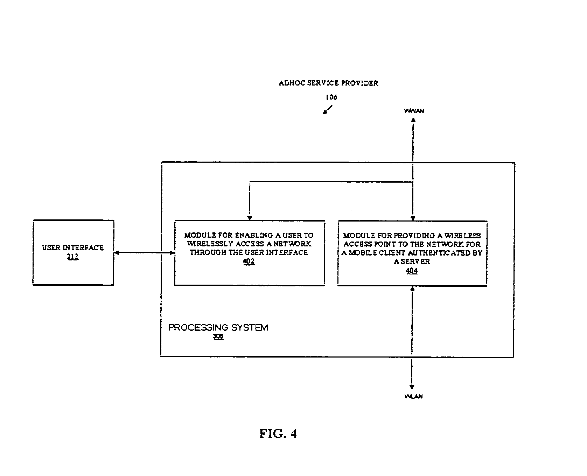

FIG. 4 is a conceptual block diagram illustrating an example of the functionality of a processing system in an adhoc service provider. The adhoc service provider 106 is shown with a user interface 212 and a processing system 306. The processing system 306 includes a module 402 for enabling a user to wirelessly access a network through the user interface, and a module 404 for providing a wireless access point to the network for a mobile client authenticated by a server.

Turning now to the mobile client in FIG. 1, a TLS session may be used by the mobile client 108 to register with the server 110. Once registered, the mobile client 108 may search for available adhoc service providers 106. When the mobile client 108 detects the presence of one or more adhoc service providers 106, it may initiate a session using EAP-TTLS with an adhoc service provider 106 based on parameters such as the available bandwidth that the adhoc service provider 106 can support, the QoS metric of the adhoc service provider 106, and the cost of the service advertised. As described earlier, a link encryption key may be established between the mobile client 108 and the adhoc service provider 106 during the establishment of the session. An SSL VPN session may be established between the mobile client 108 and the server 110 so that all traffic between the two is encrypted. The transport layer ports may be kept in the open and not encrypted to provide visibility for the network address translation functionality at the adhoc service provider 106.

The handoff of the mobile client 108 may be performed in a variety of ways. In one configuration, the mobile client 108 may maintain a limited session with multiple adhoc service providers 106, while using one adhoc service provider 106 to access the Internet. As described earlier, this approach may facilitate the handoff process. In an alternative configuration, the mobile client 108 may consider a handoff only when necessary. In this configuration, the mobile client 108 may maintain an active list of adhoc service providers 106 in its vicinity for handoff. The mobile client 108 may select an adhoc service provider 106 for handoff from the active list when the current adhoc service provider 106 needs to discontinue its service. When handoff is not possible, a mobile client 108 may need to reconnect through a different adhoc service provider 106 to access the Internet.

If the bandwidth needs of a mobile client 108 are greater than the capabilities of the available adhoc service providers 106, then the mobile client 108 may access multiple adhoc service providers 106 simultaneously. A mobile client 108 with multiple transceivers could potentially access multiple adhoc service providers 106 simultaneously using a different transceiver for each adhoc service provider 106. If the same wireless access protocol can be used to access multiple adhoc service providers 106, then different channels may be used. If the mobile client 108 has only one transceiver available, then it may distribute the time that it spends accessing each adhoc service provider 106.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application.

It is understood that the specific order or hierarchy of steps in the processes disclosed is an illustration of exemplary approaches. Based upon design preferences, it is understood that the specific order or hierarchy of steps in the processes may be rearranged. The accompanying method claims present elements of the various steps in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112, sixth paragraph, unless the element is expressly recited using the phrase "means for" or, in the case of a method claim, the element is recited using the phrase "step for."

## Claims

1. An adhoc service provider, comprising:
a user interface; and
a processing system configured to enable a user to wirelessly access a network through the user interface, the processing system being further configured to provide a wireless access point to the network for a mobile client authenticated by a server.

2. The adhoc service provider of claim 1 wherein the processing system is further configured to route authentication messages between the mobile client and the server to support the authentication of the mobile client.

3. The adhoc service provider of claim 1 wherein the processing system is further configured to maintain a wireless link with another mobile client, wherein the wireless link is maintained to facilitate handoff of said another mobile client to the another adhoc service provider.

4. The adhoc service provider of claim 3 wherein the processing system is further configured to route authentication messages between the mobile client and the server to pre-authenticate said another mobile client before handoff.

5. The adhoc service provider of claim 1 wherein the processing system is further configured to support an unsecured wireless link with the mobile client during authentication and move the mobile client to a secured wireless link after the mobile client is authenticated.

6. The adhoc service provider of claim 1 wherein the processing system is further configured to broadcast service information from the wireless access point.

7. The adhoc service provider of claim 6 wherein the service information includes cost of service, duration of service, identity of the adhoc service provider, availability of the adhoc service provider, and a quality metric for the adhoc service provider.

8. The adhoc service provider of claim 6 wherein the processing system is further configured to dynamically change the service information

9. The adhoc service provider of claim 1 wherein the processing system is further configured to provide the wireless access point by providing an interconnection between a first wireless access protocol with the mobile client and a second wireless access protocol with the network.

10. The adhoc service provider of claim 9 wherein the first wireless access protocol is different from the second wireless access protocol.

11. The adhoc service provider of claim 1 wherein the processing system is further configured to support a plurality of different wireless access protocols to the network.

12. The adhoc service provider of claim 1 wherein the processing system is further configured to provide the wireless access point to the network for one or more additional mobile clients authenticated by the server.

13. The adhoc service provider of claim 12 wherein the processing system is further configured to support a plurality of different wireless access protocols with the mobile client and the one or more additional mobile clients.

14. The adhoc service provider of claim 12 wherein the processing system further comprises a filter configured to ensure that only the mobile client and the one or more additional mobile clients authenticated by the server is provided access to the network through the wireless access point.

15. The adhoc service provider of claim 14 wherein the filter is further configured to manage the amount of content transported through the wireless access point for each of the mobile client and the one or more additional mobile clients authenticated by the server.

16. The adhoc service provider of claim 14 wherein the filter is further configured to manage the amount of content transported through the wireless access point for each of the mobile client and the one or more additional mobile clients authenticated by the server based on priority.

17. The adhoc service provider of claim 1 wherein the processing system is further configured to determine whether it can provide service to the mobile client before providing the mobile client with access to the network.

18. The adhoc service provider of claim 17 wherein the processing system is further configured to determine whether it can provide service to the mobile client based on quality of service requirements, bandwidth requirements, latency requirements, processing requirements, battery usage requirements, or required network access time.

19. The adhoc service provider of claim 1 wherein the processing system is further configured to negotiate a required network access time for the mobile client, the processing system being further configured to notify the mobile client and the server if the processing system later determines that it can no longer support the required network access time for the mobile client.

20. The adhoc service provider of claim 19 wherein the processing system is further configured to support a handoff of the mobile client to another adhoc service provider after notifying the mobile client and server that it can no longer support the required network access time for the mobile client.

21. The adhoc service provider of claim 1 wherein the processing system is further configured to route data between the user interface and the network without the mobile client being able to decipher the data.

22. The adhoc service provider of claim 1 wherein the processing system is configured to route data between the mobile client and server without being able to decipher the data.

23. The adhoc service provider of claim 1 wherein the processing system is further configured to enable the user to manage the mobile client through the user interface.

24. The adhoc service provider of claim 1 wherein the processing system is further configured to manage the mobile client in way that is transparent to the user.

25. The adhoc service provider of claim 1 wherein the processing system further comprises the server to authenticate the mobile client.

26. An adhoc service provider, comprising:
a user interface;
means for enabling a user to wirelessly access a network through the user interface; and
means for providing a wireless access point to the network for a mobile client authenticated by a server.

27. The adhoc service provider of claim 26 further comprising means for routing authentication messages between the mobile client and the server to support the authentication of the mobile client.

28. The adhoc service provider of claim 26 further comprising means for maintaining a wireless link with another mobile client, wherein the wireless link is maintained to facilitate handoff of said another mobile client to the another adhoc service provider.

29. The adhoc service provider of claim 28 further comprising means for routing authentication messages between the mobile client and the server to pre-authenticate said another mobile client before handoff.

30. The adhoc service provider of claim 26 further comprising means for supporting an unsecured wireless link with the mobile client during authentication and means for moving the mobile client to a secured wireless link after the mobile client is authenticated.

31. The adhoc service provider of claim 26 further comprising means for broadcasting service information from the wireless access point.

32. The adhoc service provider of claim 31 wherein the service information includes cost of service, duration of service, identity of the adhoc service provider, availability of the adhoc service provider, and a quality metric for the adhoc service provider.

33. The adhoc service provider of claim 31 further comprising means for dynamically changing the service information

34. The adhoc service provider of claim 26 wherein the means for providing a wireless access point to the network further comprises means for providing an interconnection between a first wireless access protocol with the mobile client and a second wireless access protocol with the network.

35. The adhoc service provider of claim 34 wherein the first wireless access protocol is different from the second wireless access protocol.

36. The adhoc service provider of claim 26 further comprising means for supporting a plurality of different wireless access protocols to the network.

37. The adhoc service provider of claim 26 further comprising means for providing a wireless access point to the network for one or more additional mobile clients authenticated by the server.

38. The adhoc service provider of claim 37 further comprising means for supporting a plurality of different wireless access protocols with the mobile client and the one or more additional mobile clients.

39. The adhoc service provider of claim 37 wherein the means for providing a wireless access point to the network further comprises means for ensuring that only the mobile client and the one or more additional mobile clients authenticated by the server is provided access to the network through the wireless access point.

40. The adhoc service provider of claim 39 further comprising means for managing the amount of content transported through the wireless access point for each of the mobile client and the one or more additional mobile clients authenticated by the server.

41. The adhoc service provider of claim 39 further comprising means for managing the amount of content transported through the wireless access point for each of the mobile client and the one or more additional mobile clients authenticated by the server based on priority.

42. The adhoc service provider of claim 26 further comprising means for determining whether service can be provided to the mobile client before providing the mobile client with access to the network.

43. The adhoc service provider of claim 42 wherein the means for determining whether service can be provided to the mobile client is based on quality of service requirements, bandwidth requirements, latency requirements, processing requirements, battery usage requirements, or required network access time.

44. The adhoc service provider of claim 26 further comprising means for negotiating a required network access time for the mobile client, and means for notifying the mobile client and the server when the required network access time for the mobile client can no longer be supported.

45. The adhoc service provider of claim 44 further comprising means for supporting a handoff of the mobile client to another adhoc service provider after notifying the mobile client and server that the required network access time for the mobile client can no longer be supported.

46. The adhoc service provider of claim 26 further comprising means for routing data between the user interface and the network without the mobile client being able to decipher the data.

47. The adhoc service provider of claim 26 further comprising means for routing data between the mobile client and server without being able to decipher the data.

48. The adhoc service provider of claim 26 further comprising means for enabling the user to manage the mobile client through the user interface.

49. The adhoc service provider of claim 26 further comprising means for managing the mobile client in way that is transparent to the user.

50. The adhoc service provider of claim 26 further comprising the server to authenticate the mobile client.

51. A method of providing service from an adhoc service provider having a user interface, the method comprising:
enabling a user to wirelessly access a network through the user interface; and
providing a wireless access point to the network for a mobile client authenticated by a server.

52. The method of claim 51 further comprising routing authentication messages between the mobile client and the server to support the authentication of the mobile client.

53. The method of claim 51 further comprising maintaining a wireless link with another mobile client, wherein the wireless link is maintained to facilitate handoff of said another mobile client to the another adhoc service provider.

54. The method of claim 53 further comprising routing authentication messages between the mobile client and the server to pre-authenticate said another mobile client before handoff.

55. The method of claim 51 further comprising supporting an unsecured wireless link with the mobile client during authentication and moving the mobile client to a secured wireless link after the mobile client is authenticated.

56. The method of claim 51 further comprising broadcasting service information from the wireless access point.

57. The method of claim 56 wherein the service information includes cost of service, duration of service, identity of the adhoc service provider, availability of the adhoc service provider, and a quality metric for the adhoc service provider.

58. The method of claim 56 further comprising dynamically changing the service information

59. The method of claim 51 wherein the providing of a wireless access point to the network further comprises providing an interconnection between a first wireless access protocol with the mobile client and a second wireless access protocol with the network.

60. The method of claim 59 wherein the first wireless access protocol is different from the second wireless access protocol.

61. The method of claim 51 further comprising supporting a plurality of different wireless access protocols to the network.

62. The method of claim 51 further comprising providing a wireless access point to the network for one or more additional mobile clients authenticated by the server.

63. The method of claim 62 further comprising supporting a plurality of different wireless access protocols with the mobile client and the one or more additional mobile clients.

64. The method of claim 62 wherein the providing of a wireless access point to the network further comprises ensuring that only the mobile client and the one or more additional mobile clients authenticated by the server is provided access to the network through the wireless access point.

65. The method of claim 64 further comprising managing the amount of content transported through the wireless access point for each of the mobile client and the one or more additional mobile clients authenticated by the server.

66. The method of claim 64 further comprising managing the amount of content transported through the wireless access point for each of the mobile client and the one or more additional mobile clients authenticated by the server based on priority.

67. The method of claim 51 further comprising determining whether service can be provided to the mobile client before providing the mobile client with access to the network.

68. The method of claim 67 wherein the determining of whether service can be provided to the mobile client is based on quality of service requirements, bandwidth requirements, latency requirements, processing requirements, battery usage requirements, or required network access time.

69. The method of claim 51 further comprising negotiating a required network access time for the mobile client, and notifying the mobile client and the server when the required network access time for the mobile client can no longer be supported.

70. The method of claim 69 further comprising supporting a handoff of the mobile client to another adhoc service provider after notifying the mobile client and server that the required network access time for the mobile client can no longer be supported.

71. The method of claim 51 further comprising routing data between the user interface and the network without the mobile client being able to decipher the data.

72. The method of claim 51 further comprising routing data between the mobile client and server without being able to decipher the data.

73. The method of claim 51 further comprising enabling the user to manage the mobile client through the user interface.

74. The method of claim 51 further comprising managing the mobile client in way that is transparent to the user.

75. The method of claim 51 further comprising providing the server to authenticate the mobile client.

76. A machine-readable medium comprising instructions executable by a processing system in an adhoc service provider having a user interface, the instructions comprising:
code for enabling a user to wirelessly access a network through the user interface; and
code for providing a wireless access point to the network for a mobile client authenticated by a server.

77. The machine-readable medium of claim 76 wherein the instructions further comprise code for routing authentication messages between the mobile client and the server to support the authentication of the mobile client.

78. The machine-readable medium of claim 76 wherein the instructions further comprise code for maintaining a wireless link with another mobile client, wherein the wireless link is maintained to facilitate handoff of said another mobile client to the another adhoc service provider.

79. The machine-readable medium of claim 78 wherein the instructions further comprise code for routing authentication messages between the mobile client and the server to pre-authenticate said another mobile client before handoff.

80. The machine-readable medium of claim 76 wherein the instructions further comprise code for supporting an unsecured wireless link with the mobile client during authentication and code for moving the mobile client to a secured wireless link after the mobile client is authenticated.

81. The machine-readable medium of claim 76 wherein the instructions further comprise code for broadcasting service information from the wireless access point.

82. The machine-readable medium of claim 81 wherein the service information includes cost of service, duration of service, identity of the adhoc service provider, availability of the adhoc service provider, and a quality metric for the adhoc service provider.

83. The machine-readable medium of claim 81 wherein the instructions further comprise code for dynamically changing the service information

84. The machine-readable medium of claim 76 wherein the code for providing a wireless access point to the network further comprises code for providing an interconnection between a first wireless access protocol with the mobile client and a second wireless access protocol with the network.

85. The machine-readable medium of claim 84 wherein the first wireless access protocol is different from the second wireless access protocol.

86. The machine-readable medium of claim 76 wherein the instructions further comprise code for supporting a plurality of different wireless access protocols to the network.

87. The machine-readable medium of claim 76 wherein the instructions further comprise code for providing a wireless access point to the network for one or more additional mobile clients authenticated by the server.

88. The machine-readable medium of claim 87 wherein the instructions further comprise code for supporting a plurality of different wireless access protocols with the mobile client and the one or more additional mobile clients.

89. The machine-readable medium of claim 87 wherein the code for providing a wireless access point to the network further comprises code for ensuring that only the mobile client and the one or more additional mobile clients authenticated by the server is provided access to the network through the wireless access point.

90. The machine-readable medium of claim 89 wherein the instructions further comprise code for managing the amount of content transported through the wireless access point for each of the mobile client and the one or more additional mobile clients authenticated by the server.

91. The machine-readable medium of claim 89 wherein the instructions further comprise code for managing the amount of content transported through the wireless access point for each of the mobile client and the one or more additional mobile clients authenticated by the server based on priority.

92. The machine-readable medium of claim 76 wherein the instructions further comprise code for determining whether service can be provided to the mobile client before providing the mobile client with access to the network.

93. The machine-readable medium of claim 92 wherein the code for determining whether service can be provided to the mobile client makes such determination based on quality of service requirements, bandwidth requirements, latency requirements, processing requirements, battery usage requirements, or required network access time.

94. The machine-readable medium of claim 76 wherein the instructions further comprise code for negotiating a required network access time for the mobile client, and code for notifying the mobile client and the server when the required network access time for the mobile client can no longer be supported.

95. The machine-readable medium of claim 94 wherein the instructions further comprise code for supporting a handoff of the mobile client to another adhoc service provider after notifying the mobile client and server that the required network access time for the mobile client can no longer be supported.

96. The machine-readable medium of claim 76 wherein the instructions further comprise code for routing data between the user interface and the network without the mobile client being able to decipher the data.

97. The machine-readable medium of claim 76 wherein the instructions further comprise code for routing data between the mobile client and server without being able to decipher the data.

98. The machine-readable medium of claim 76 wherein the instructions further comprise code for enabling the user to manage the mobile client through the user interface.

99. The machine-readable medium of claim 76 wherein the instructions further comprise code for managing the mobile client in way that is transparent to the user.

100. The machine-readable medium of claim 76 wherein the instructions further comprise code for providing the server to authenticate the mobile client.
